# FASCICULE DE BREVET EUROPEEN

(11) **EP 1 592 892 B1**
(45) Date de publication et mention de la délivrance du brevet: **30.01.2008**
(21) Numéro de dépôt: 03782568.4
(22) Date de dépôt: 14.11.2003
(51) Int. Cl.: F16B 13/06

(54) **BRIDE DE CENTRAGE**
BEFESTIGUNGSFLANSCH
CENTRING FLANGE

(30) Priorité: 13.02.2003 FR 0301701
(43) Date de publication de la demande: 09.11.2005
(73) Titulaire: Norelem SAS, 91300 Massy (FR)
(72) Inventeur: CARDON-DUBOIS, Damien, F-10150 Pont Sainte Marie (FR)
(74) Mandataire: Hammond, William
(86) Numéro de dépôt international: PCT/FR2003/003393
(87) Numéro de publication internationale: WO 2004/081394

(56) Documents cités:
- DE-A- 2 046 341
- DE-A- 2 247 003
- DE-U- 8 904 220
- FR-A- 1 328 744
- LU-A- 38 015

## Description

La présente invention a pour objet une bride de centrage permettant notamment la solidarisation de deux éléments consécutifs.

Les brides de centrage permettent de solidariser deux éléments consécutifs en réalisant un blocage par expansion transversale. Une telle bride comporte un noyau cylindrique sur lequel sont emmanchés deux éléments d'extrémités dont les faces en regard sont inclinées vers ce noyau et entre lesquels est disposé un moyen se déplaçant transversalement par rapport au noyau sous l'effet d'un serrage des éléments d'extrémité l'un vers l'autre : ce moyen peut être constitué par une couronne de billes enfilées sur un jonc élastique, par exemple.

On connaît également des brides de centrage constitué par une ou deux pinces s'expansant dans un des deux éléments consécutifs à solidariser.

Ces brides de centrage actuellement connues présentent comme inconvénient principal de ne prendre appui que sur un des éléments à solidariser.

Ainsi, on citera la bride de centrage décrite dans le document DE-89 04220-U permettant de rendre solidaire un élément sur une plateforme. Cette bride de centrage comporte un noyau cylindrique muni d'une tête à une des extrémités, sur lequel sont emmanchés deux éléments d'extrémité dont l'un prenant appui sur cette tête et dont les faces en regard sont inclinées vers le noyau cylindrique. Entre ces faces est disposé un moyen se déplaçant transversalement par rapport au noyau cylindrique sous l'effet d'un déplacement des éléments d'extrémité et l'un vers l'autre : ce moyen est constitué par des plaques consécutives, en arc de cercle et maintenues en position par un moyen élastique.

Mais selon ce document antérieur, les côtés des plaques en regard des faces inclinées des éléments d'extrémités sont inclinés selon la même configuration. Les faces inclinées des éléments d'extrémités sont coniques : les côtés des plaques en regard sont également de forme cylindrique. L'angle au sommet des cônes est de 60°.

Aussi un des buts de la présente invention est-il de fournir une bride de centrage prenant appui sur les éléments à solidariser.

Un autre but de l'invention est de fournir une telle bride dont la réalisation est économique et simple.

Ces buts, ainsi que d'autres qui apparaîtront par la suite, sont atteints par une bride de centrage comportant un noyau cylindrique muni d'une tête à une des extrémités, sur lequel sont emmanchés deux éléments d'extrémité dont l'un prenant appui sur cette tête et dont les faces en regard sont inclinées vers ce noyau, et entre lesquels est disposé un moyen se déplaçant transversalement par rapport au noyau cylindrique sous l'effet d'un serrage des éléments d'extrémité l'un vers l'autre, ce moyen étant constitué par des plaques consécutives en arc de cercle maintenues en position par un moyen élastique, ladite bride de centrage est caractérisée selon la présente invention, par le fait que les côtés desdites plaques en regard des faces inclinées des éléments d'extrémité comportent chacun une rampe coopérant avec ladite face.

Avantageusement, l'angle au sommet des cônes formés par les faces en regard des éléments d'extrémité est compris entre 30° et 90°, et, de préférence, d'environ 60°.

Avantageusement, le moyen élastique est constitué par deux joncs élastiques situés dans des rainures respectivement qui sont parallèles entre elles et dans un plan sensiblement perpendiculaire au noyau cylindrique et situées vers les extrémités des plaques.

La description qui suit et qui ne présente aucun caractère limitatif, doit être lue en regard des figures annexées, parmi lesquelles :

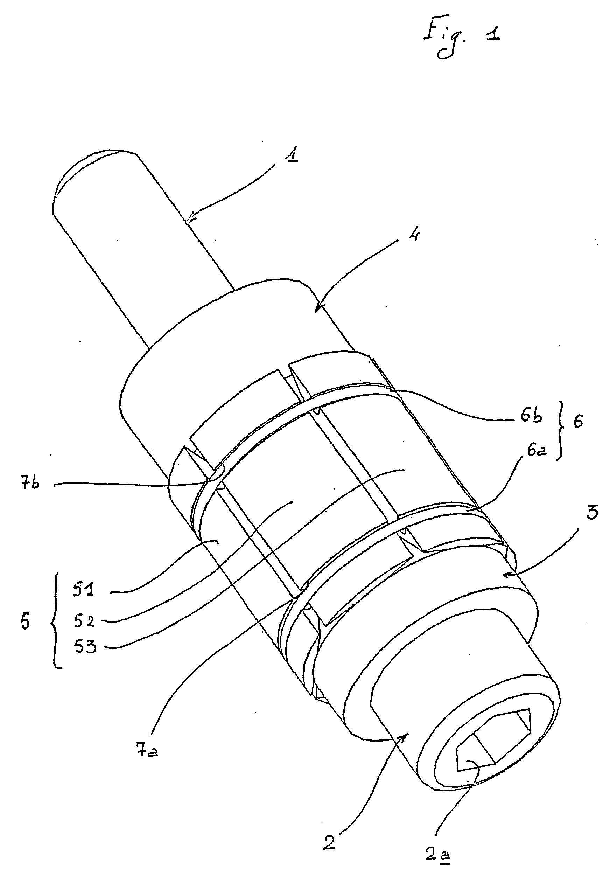

- la figure 1 représente, en perspective, une bride de centrage selon la présente invention ; et,

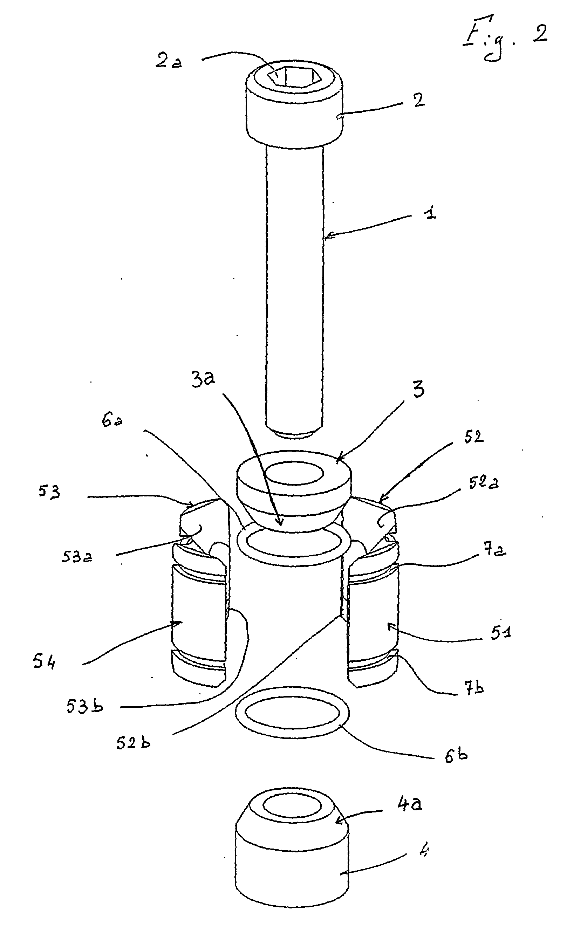

- la figure 2 est une vue éclatée de l'objet de la figure 1.

Ainsi qu'on peut le voir sur ces figures, une bride de centrage selon la présente invention comprend, en premier lieu, un noyau cylindrique 1 muni, à une de ses extrémités, d'une tête 2 pouvant comporter un orifice 2a pour une clé de serrage ; ce noyau 1 et cette tête 2 constitue en fait un boulon.

En deuxième lieu, cette bride de centrage comporte deux éléments d'extrémités, 3 et 4, formant butées : l'un, 3, est en appui sur la tête 2 et est susceptible de se déplacer le long du noyau cylindrique 1. Les faces en regard, 3a et 4a respectivement, de ces éléments 3 et 4 sont inclinées vers le noyau cylindrique 1 : l'angle au sommet des cônes ainsi réalisés est compris entre 30° et 90°, et est de préférence d'environ 60°.

En troisième lieu, cette bride de centrage comprend un moyen 5 qui est disposé entre ces deux éléments d'extrémité 3 et 4 et peut se déplacer transversalement par rapport au noyau cylindrique 1 sous l'effet d'un serrage des éléments d'extrémité 3 et 4 l'un vers l'autre. Selon la présente invention, ce moyen 5 est constitué par des plaques 51, 52,... consécutives, en arc de cercle et maintenues en position par un moyen élastique 6. Les côtés 51 a, 51 b, 52a, 52b,... en regard des faces inclinées 3a et 4a des éléments d'extrémité 3 et 4 comportent chacun une rampe coopérant avec la face correspondante 3a, 4a : ainsi, ces côtés 51 a, 51b, 52a, 52b,... peuvent-ils se déplacer par glissement sur les faces inclinées 3a et 4a des éléments d'extrémité 3 et 4.

Ainsi que le sait l'homme du métier, une rampe est un plan incliné : de ce fait celle-ci est plane, de telle sorte que la face inclinée correspondante de l'élément d'extrémité concerné prend appui sur cette rampe en une ligne à un moment donné, et se déplace sur celle-ci selon une de ses génératrices.

Les plaques 51, 52 .. sont, selon le présent exemple de réalisation, au nombre de quatre et en forme de quart de cercle. Les côtés latéraux de deux plaques consécutives sont biseautés à 45°de façon que l'ensemble des plaques forme, au repos, un manchon cylindrique autour du noyau cylindrique.

Quant au moyen élastique 6, il est constitué par deux joncs élastiques 6a et 6b, qui appliquent, au repos, les plaques 51,52,.. contre le noyau cylindrique 1 et les maintiennent ensemble et en position sensiblement parallèle par rapport au noyau cylindrique 1, lorsque ces plaques se déplacent transversalement par rapprochement des éléments d'extrémités 3 et 4 l'un vers l'autre. Selon le présent exemple de réalisation, ces deux joncs élastiques (6a, 6b) sont situés dans des rainures (7a, 7b) respectivement qui sont parallèles entre elles et dans un plan sensiblement perpendiculaire au noyau cylindrique (1) et situées vers les extrémités des plaques (51, 52, ..).

Pour solidariser deux éléments consécutifs, l'un comportant un trou borgne et l'autre un orifice traversant de même diamètre, on amène l'orifice traversant en regard du trou borgne et on introduit une bride de centrage selon la présente invention. L'élément d'extrémité 4 repose sur le fond du trou borgne et constitue une butée fixe. En agissant sur la tête 2, on entraîne, de façon connue, un déplacement de l'élément d'extrémité 3 vers l'autre élément d'extrémité 4 : de ce fait, ces deux éléments d'extrémité 3 et 4 s'enfoncent par leurs faces 3a et 4a, formant rampe, entre les plaques 51, 52, .. et le noyau cylindrique 1 et provoquent ainsi un écartement ou déplacement transversal de ces plaques jusqu'à ce qu'elles prennent appui sur la paroi latérale de l'ensemble trou borgne - orifice traversant. Ainsi, les deux éléments consécutifs sont-ils maintenus ensemble grâce à la pression exercée par les plaques 51, 52,...

## Revendications

1. - Bride de centrage comportant un noyau cylindrique (1) muni d'une tête (2) à une des extrémités, sur lequel sont emmanchés deux éléments d'extrémité (3,4) dont l'un prenant appui sur ladite tête (2) et dont les faces en regard, respectivement (3a) et (4a) sont inclinées vers ledit noyau cylindrique (1) et entre lesquels est disposé un moyen (5) se déplaçant transversalement par rapport audit noyau cylindrique (1) sous l'effet d'un déplacement des éléments d'extrémité (3) et (4) l'un vers l'autre, ledit moyen (5) étant constitué par des plaques (51, 52 ..) consécutives, en arc de cercle et maintenues en position par un moyen élastique (6) **caractérisée par le fait que** les côtés (51a, 51b, 52a, 52b,...) desdites plaques (51, 52,...) en regard des faces inclinées. (3a, 4a) des éléments d'extrémité (3, 4) comportent chacun une rampe formant un plan incliné coopérant avec ladite face.

2. - Bride de centrage selon la revendication 1, **caractérisée par le fait que** l'angle au sommet des cônes formés par les faces en regard (3a, 4a) des éléments d'extrémité (3, 4) est compris entre 30° et 90°.

3. - Bride de centrage selon la revendication 2, **caractérisée par le fait que** cet angle au sommet est d'environ 60°.

4. - Bride de centrage selon la revendication 1, **caractérisée par le fait que** le moyen élastique (6) est constitué par deux joncs élastiques (6a, 6b) situés dans des rainures (7a, 7b) respectivement qui sont parallèles entre elles et dans un plan sensiblement perpendiculaire au noyau cylindrique (1) et situées vers les extrémités des plaques (51, 52, ..).

## Claims

1. A centring flange comprising a cylindrical core (1) equipped with a head (2) at one of its ends, to which there are fitted two end elements (3, 4), one of which rests on said head (2) and the opposing faces of which, (3a) and (4a) respectively, are inclined toward said cylindrical core (1) and between which is disposed a means (5) moving transversely relative to said cylindrical core (1) when the end elements (3) and (4) move toward each other, said means (5) consisting of consecutive plates (51, 52, and so on) which are in the form of an arc of a circle and are held in position by a resilient means (6), **characterised by** the fact that the sides (51 a, 51 b, 52a, 52b, and so on) of said plates (51, 52, and so on) opposing the inclined faces (3a, 4a) of the end elements (3, 4) each comprise a ramp forming an inclined plane cooperating with said face.

2. A centring flange according to claim 1, **characterised by** the fact that the angle at the tip of the cones formed by the opposing faces (3a, 4a) of the end elements (3, 4) is between 30° and 90°.

3. A centring flange according to claim 2, **characterised by** the fact that this angle at the tip is approximately 60°.

4. A centring flange according to claim 1, **characterised by** the fact that the resilient means (6) consists of two resilient snap rings (6a, 6b) located in respective grooves (7a, 7b) which are parallel to each other and in a plane substantially perpendicular to the cylindrical core (1) and located toward the ends of the plates (51, 52, and so on).

## Patentansprüche

1. Zentrierflansch, umfassend einen zylindrischen Kern (1), der an einem Ende mit einem Kopf (2) ausgestattet ist, wobei an dem Kern zwei Endelemente (3, 4) angesetzt sind, von denen eines am Kopf (2) aufliegt und deren gegenüberliegende Flächen (3a) und (4a) zum zylindrischen Kern (1) hin geneigt sind und zwischen denen ein sich unter dem Einfluss einer Verschiebung der Endelemente (3) und (4) in Richtung zueinander transversal in bezug zum zylindrischen Kern (1) verschiebendes Element (5) angeordnet ist, wobei das Element (5) von aufeinanderfolgenden Platten (51, 52, ...) gebildet wird, die kreisbogenförmig angeordnet sind und durch ein elastisches Element (6) in Position gehalten werden, **dadurch gekennzeichnet, dass** die Seiten (51a, 51b, 52a, 52b, ...) der Platten (51, 52, ...) gegenüber den geneigten Flächen (3a, 4a) der Endelemente (3, 4) jeweils eine Rampe aufweisen, die eine mit dieser Fläche zusammenwirkende schiefe Ebene bildet.

2. Zentrierflansch nach Anspruch 1, **dadurch gekennzeichnet, dass** der Winkel an der Spitze der durch die gegenüberliegenden Flächen (3a, 4a) der Endelemente (3, 4) gebildeten Kegel 30° bis 90° beträgt.

3. Zentrierflansch nach Anspruch 2, **dadurch gekennzeichnet, dass** der Winkel am Kopf der Kegel ungefähr 60° beträgt.

4. Zentrierflansch nach Anspruch 1, **dadurch gekennzeichnet, dass** das elastische Element (6) aus zwei elastischen Ringen (6a, 6b) besteht, die sich in Rillen (7a, 7b) befinden, die zueinander parallel und in einer zum zylindrischen Kern (1) im wesentlichen senkrechten Ebene liegen und in der Nähe der Enden der Platten (51, 52, ...) angeordnet sind.
